(19) Europäisches Patentamt
European Patent Office
Office européen des brevets

(11) EP 2 792 484 A1

(12) **EUROPEAN PATENT APPLICATION**
published in accordance with Art. 153(4) EPC

(43) Date of publication:
**22.10.2014 Bulletin 2014/43**

(21) Application number: **12856615.5**

(22) Date of filing: **13.12.2012**

(51) Int Cl.:
***B32B 27/30*** *(2006.01)* ***B32B 7/02*** *(2006.01)*

(86) International application number:
**PCT/JP2012/082351**

(87) International publication number:
**WO 2013/089187 (20.06.2013 Gazette 2013/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.12.2011 JP 2011276331**
**11.06.2012 JP 2012132283**

(71) Applicant: **Nitto Denko Corporation**
**Osaka 567-8680 (JP)**

(72) Inventors:
- **KAWASAKI, Motoko**
  **Ibaraki-shi**
  **Osaka 567-8680 (JP)**
- **FUJISAWA, Junichi**
  **Ibaraki-shi**
  **Osaka 567-8680 (JP)**
- **WATANABE, Masahiko**
  **Ibaraki-shi**
  **Osaka 567-8680 (JP)**
- **OHMORI, Yutaka**
  **Ibaraki-shi**
  **Osaka 567-8680 (JP)**

(74) Representative: **Stolmár & Partner**
**Blumenstraße 17**
**80331 München (DE)**

(54) **INFRARED REFLECTIVE FILM**

(57) To provide an infrared reflective film including a reflective layer and a protective layer laminated sequentially on one surface of a substrate, wherein the protective layer is a layer including a polymer including at least any two or more repeating units of the repeating units A, B and C in the following chemical formula I, and the indentation hardness of the protective layer is 1.2 MPa or more.

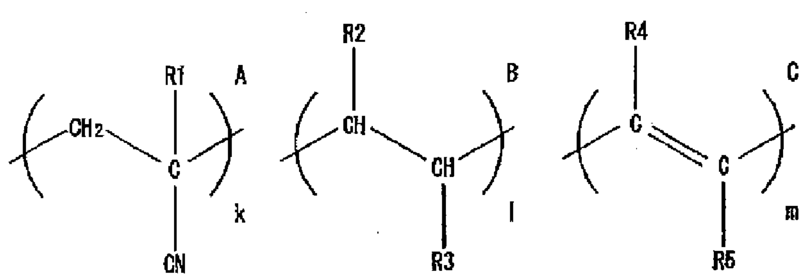

(R1: H or a methyl group, R2 to R5: H, or an alkyl or alkenyl group having 1 to 4 carbon atoms)

EP 2 792 484 A1

FIG. 1

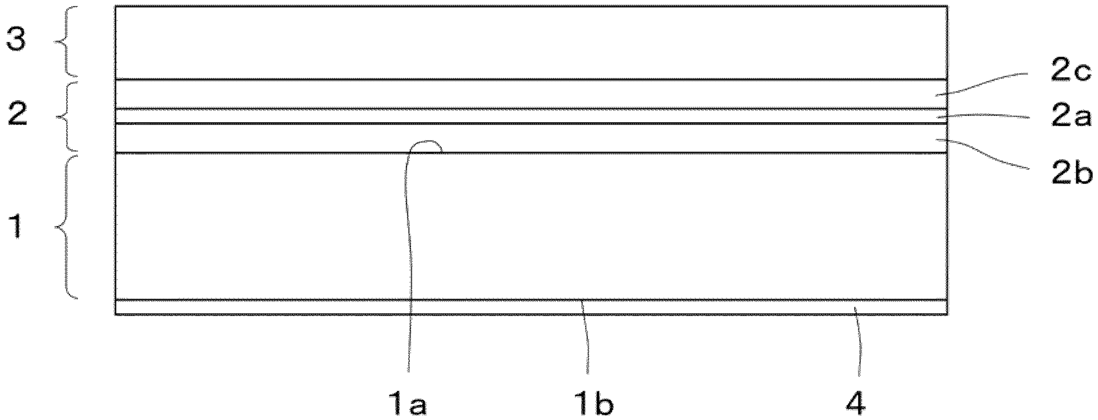

## Description

### FIELD OF THE INVENTION

The present invention relates to an infrared reflective film having a high transmissivity in the visible light region and a high reflectivity in the infrared light region.

### RELATED ART

An infrared reflective film is mainly used for suppressing the thermal effect of the radiated sunlight. For example, by attaching an infrared reflective film to a window glass of a building, a vehicle or the like, the infrared light (in particular, near infrared light) incident into the inside of a room through the window glass is shielded to suppress the temperature rise in the room, and accordingly the electric power consumed for air conditioning is suppressed so as to allow energy saving to be achieved.

For reflection of the infrared light, an infrared reflective layer including a layered structure made of metals or metal oxides is used. However, metals or metal oxides are low in abrasion resistance. Accordingly, in an infrared reflective film, a protective layer is generally arranged on the infrared reflective layer. For example, Patent Literature 1 discloses the use of polyacrylonitrile (PAN) as a material for the protective layer. A polymer such as polyacrylonitrile is low in infrared light absorptivity, and the far infrared light output from inside a room through a light translucent member to the outside can be shielded; thus, it is possible to achieve the energy saving based on thermal insulation effect in winter, or during night in which the temperature outside the room is lower.

In the case where a polymer such as polyacrylonitrile is used as a material for the protective layer, the protective layer is formed with the procedure such that first the polymer is dissolved in a solvent to prepare a solution, the resulting solution is applied on the infrared reflective layer, and then the applied solution is dried (the solvent is evaporated).

### CITATION LIST

#### Patent Literature

Patent Literature 1: JP 61-51762 B

### DISCLOSURE OF THE INVENTION

### PROBLEMS TO BE SOLVED BY THE INVENTION

This type of infrared reflective film is attached to a window glass of a building, a vehicle or the like so as for the protective layer to be on the front side. Accordingly, the surface of the protective layer is always subjected to various stresses from outside. Therefore, when the protective layer has no sufficient strength (hardness), the protective layer is indented by the stress from outside to be deformed to a large extent, and sometimes poor exterior appearance is caused. When the deformation of the protective layer causes the exposure of the infrared reflective layer, the infrared reflective layer tends to be damaged. Consequently, there occurs a problem that the infrared reflection property is impaired so as for the infrared reflective film to function insufficiently.

Accordingly, the present invention has been achieved in view of the circumstances as described above, and the problem to be solved by the present invention is to provide an infrared reflective film in which the deformation of the protective layer due to indentation is suppressed.

### MEANS FOR SOLVING PROBLEMS

The infrared reflective film according to the present invention is an infrared reflective film including a reflective layer and a protective layer sequentially laminated on one surface of a substrate, wherein the protective layer is a layer including at least any two or more repeating units of the repeating units A, B and C in the following chemical formula I, and the indentation hardness of the protective layer is 1.2 MPa or more.

[Formula 1]

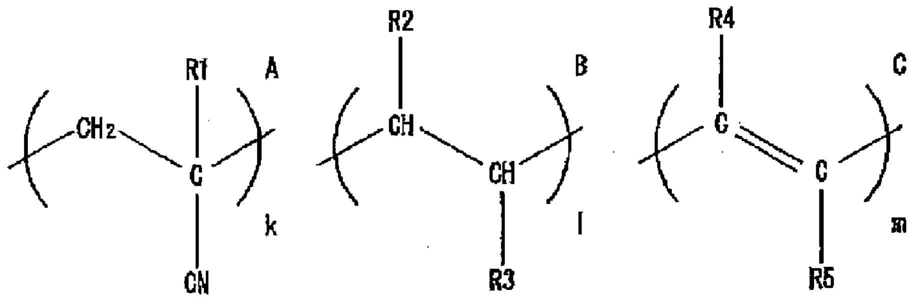

(R1: H or a methyl group, R2 to R5: H or an alkyl or alkenyl group having 1 to 4 carbon atoms)

Here, in an aspect of the infrared reflective film according to the present invention, the protective layer can be configured so as to have the cross-linked structure of the polymer.

In this case, the cross-linked structure can be designed to be formed by irradiation of the protective layer with an electron beam.

In another aspect of the infrared reflective film according to the present invention, the surface of the protective layer side can be configured so as to have a normal emittance of 0.20 or less.

In yet another aspect of the infrared reflective film according to the present invention, an aqueous urethane adhesive layer can be configured to be further interposed between the reflective layer and the protective layer.

ADVANTAGEOUS EFFECT OF THE INVENTION

According to the present invention, it is possible to provide an infrared reflective film in which the deformation of the protective layer due to indentation is suppressed.

BRIEF DESCRIPTION OF THE DRAWINGS

FIG. 1 is a schematic diagram for illustrating the layered structure of the infrared reflective film according to an embodiment of the present invention.

FIG. 2A is a schematic diagram for illustrating the projected contact area measured in an indentation test, showing a state of a protective layer being indented with an indenter.

FIG. 2B is a schematic diagram illustrating the projected contact area measured in the indentation test as viewed in the direction of the arrow I in FIG. 2A, with the measurement range of the projected contact area to which hatching is applied.

DESCRIPTION OF EMBODIMENTS

Hereinafter, the infrared reflective film according to an embodiment of the present invention is described. The infrared reflective film according to the present embodiment is an infrared reflective film having the heat shielding property (near infrared reflection property) possessed by conventional infrared reflective films and additionally, simultaneously a heat insulating property (far infrared reflection property).

As shown in FIG. 1, the infrared reflective film according to the present embodiment has a layer structure in which a reflective layer 2 and a protective layer 3 are laminated in this order on one surface 1a of a substrate 1 and an adhesive layer 4 is disposed on the other surface 1b.

As the substrate 1, a polyester-based film is used; examples of such a polyester-based film include films made of polyethylene terephthalate, polyethylene naphthalate, polypropylene terephthalate, polybutylene terephthalate, polycyclohexylenemethylene terephthalate, or mixed resins composed of two or more of these. Among these films, from the viewpoint of performance, polyethylene terephthalate (PET) film is preferable, and in particular, biaxially-stretched polyethylene terephthalate (PET) film is suitable.

The reflective layer 2 is a vapor deposited layer formed by vapor deposition on a surface (one surface) of the substrate 1. Examples of the method for forming the vapor deposited layer include physical vapor deposition (PVD) such as sputtering, vacuum vapor deposition and ion plating. In the vacuum vapor deposition, the reflective layer 2 is formed

on the substrate 1 by heating and vaporizing a vapor deposition substance in vacuum by a method such as resistance heating, electron beam heating, laser light heating or arc discharge. In sputtering, in a vacuum with an inert gas such as argon present therein, the reflective layer 2 is formed on the substrate 1 in such a way that the positive ion such as $Ar^+$ accelerated by glow discharge or the like is made to collide with a target (vapor deposition substance) to sputter and evaporate the vapor deposition substance. Ion plating is a vapor deposition method having a combined form of vacuum vapor deposition and sputtering. In this method, the reflective layer 2 is formed in such a way that in vacuum, the evaporated atoms released by heating are ionized and accelerated in an electric field, and made to adhere in a high energy state on the substrate 1.

The reflective layer 2 has a multilayer structure in which a translucent metal layer 2a is sandwiched by a pair of metal oxide layers 2b and 2c, and is formed in such a way that by using the foregoing vapor deposition method(s), first the metal oxide layer 2b is vapor deposited on the surface (one surface) 1a of the substrate 1, and next, the translucent metal layer 2a is vapor deposited on the metal oxide layer 2b, and finally, the metal oxide layer 2c is vapor deposited on the translucent metal layer 2a. For the translucent metal layer 2a, for example, the following are used: aluminum (Al), silver (Ag), silver alloys (such as MgAg, Ag-Pd-Cu alloy (APC), AgCu, AgAuCu, AgPd and AgAu), aluminum alloys (such as AlLi, AlCa and AlMg), or metal materials as combinations of two or more of these or as combined two or more layers made of these. The metal oxide layers 2b and 2c impart transparency to the reflective layer 2, and prevent the degradation of the translucent metal layer 2a; for the metal oxide layers 2b and 2c, for example, the following oxides are used: indium tin oxide (ITO), indium titanium oxide (IT), indium zinc oxide (IZO), gallium zinc oxide (GZO), aluminum zinc oxide (AZO) and gallium indium oxide (IGO).

The protective layer 3 is a layer including a polymer including at least any two or more repeating units of the repeating units A, B and C in the following chemical formula I. As R1 in chemical formula I, H or a methyl group can be used. As R2 to R5 in chemical formula I, H, or an alkyl or alkenyl group having 1 to 4 carbon atoms can be used. Incidentally, the substance constituted with the repeating units A, B and C, using H as R1 to R5 is hydrogenated nitrile rubber (HNBR).

[Formula 1]

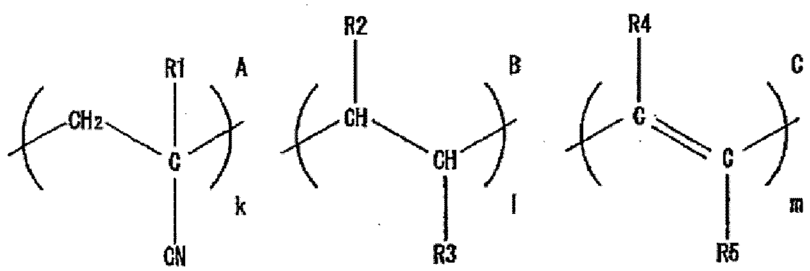

(R1: H or a methyl group, R2 to R5: H or an alkyl or alkenyl group having 1 to 4 carbon atoms)

Examples of the monomer components for obtaining these polymers include: as shown in chemical formula II, acrylonitrile (repeating unit D) and the derivatives thereof, an alkyl group (repeating unit E) having 4 carbon atoms and the derivatives thereof, and butadiene (repeating unit F1 or F2) and copolymers of the derivatives thereof. Here, R6 is H or a methyl group, and R7 to R18 are each H or an alkyl group having 1 to 4 carbon atoms. It is to be noted that F1 and F2 each represent a repeating unit in the polymerization of butadiene, and F1 is the main repeating unit. These polymers may be nitrile rubbers which are the copolymers between acrylonitrile (repeating unit D) and the derivatives thereof and 1,3-butadiene (repeating unit F1) and the derivatives thereof, shown in chemical formula II, and may also be hydrogenated nitrile rubbers in which a fraction or the whole of the double bonds included in nitrile rubber are hydrogenated.

[Formula 2]

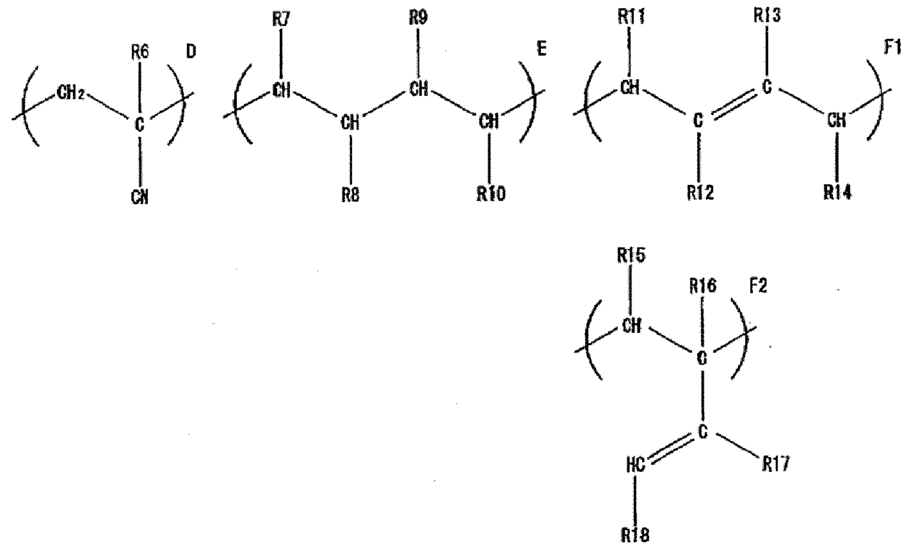

(R6: H or a methyl group, R7 to R18: H or an alkyl group having 1 to 4 carbon atoms)

By using chemical formula III representing a part cut out of the foregoing copolymer, the relations between the copolymer in which acrylonitrile, butadiene and alkyl are polymerized and the respective repeating units A, B and C are described. In chemical formula III, a moiety of the polymer used for the protective layer 3 is cut out, and 1,3-butadiene (repeating unit F1), acrylonitrile (repeating unit D) and 1,3-butadiene (repeating unit F1) are sequentially bonded. Chemical formula III shows a bonding example in which R7 and R11 to R14 are H. In chemical formula III, the side of acrylonitrile to which the cyano group (-CN) is bonded is bonded to butadiene on the left, and butadiene on the right is formed on the side of acrylonitrile to which no cyano group (-CN) is bonded. In such a bonding example, one repeating unit A, one repeating unit B and two repeating units C are included. Among these units, the repeating unit A includes the carbon atom to which the right carbon atom of butadiene on the left and the cyano group (-CN) of acrylonitrile are bonded; the repeating unit B is a combination including the carbon atom to which no cyano (-CN) group of acrylonitrile is bonded and the left carbon atom of butadiene on the right. The leftmost carbon atom of butadiene on the left and the rightmost carbon atom of butadiene on the right become a carbon atom of a portion of the repeating unit A or the repeating unit B depending on the type of the molecule to be bonded.

[Formula 3]

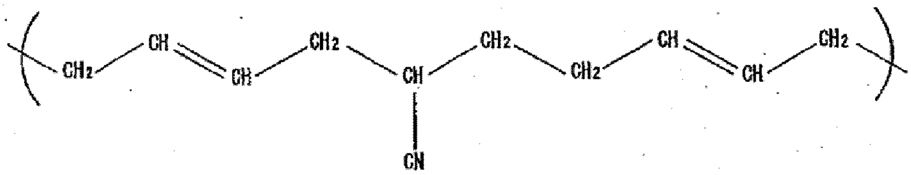

The indentation hardness of the protective layer 3 is 1.2 MPa or more. The indentation hardness can be measured by an indentation test which is a type of hardness test using a micro hardness tester. Specifically, the indentation hardness is derived as follows; as shown in FIG. 2A and FIG. 2B, in a state in which a trigonal pyramid-shaped indenter C is indented into the protective layer 3 to a predetermined depth D, the area A (projected contact area) of the projected area PA obtained by viewing the area in which the indenter C is brought into contact with the protective layer 2 in the indentation direction of the indenter C and the indentation load P of the indenter C are measured, and from the projected contact area A and the indentation load P of the indenter C obtained by the measurement (obtained by the in-situ observation), the indentation hardness is derived on the basis of the following formula 1.

$$H = P/A \qquad \text{... Formula 1}$$

(H: indentation hardness, P: load, A: projected contact area)

As the method for measuring the projected contact area, by using the method disclosed in JP 2005-195357 A, the projected contact area can be measured. Specifically, a transparent indenter is adopted as the indenter C, and by taking the image of the contact area between the protective layer 3 and the indenter C, visible through the indenter C, with an imaging device such as a CCD camera from above the indenter C (above in the indentation direction of the indenter C), the area (projected contact area) A of the projected area PA can be measured. The material of the indenter C may be high in hardness, and transparent to such a degree that allows the projected contact area to be measurable, and thus, diamond, single crystal alumina oxide (sapphire, ruby), and translucent alumina polycrystal are adapted to these conditions. As the measurement apparatus for implementing the foregoing measurement, "the Observation type micro material evaluation system, Micro Indent Scope MIS-2000 (trade name, manufactured by Sanko Co., Ltd.)" is available.

Referring back to FIG. 1, the protective layer 3 is formed by the procedure in which the foregoing polymer (if necessary, together with a cross-linking agent) is dissolved in a solvent to prepare a solution, the solution is applied onto the reflective layer 2, and then, the solution is dried (the solvent is evaporated). The solvent is a solvent capable of dissolving the foregoing polymer, and for example, solvents such as methyl ethyl ketone (MEK) and methylene chloride (dichloromethane) are used. It is to be noted that methyl ethyl ketone and methylene chloride are low boiling point solvents (the boiling points of methyl ethyl ketone and methylene chloride are 79°C and 40°C, respectively). Accordingly, when these solvents are used, the solvents can be evaporated at low drying temperatures, and hence the substrate 1 (or the reflective layer 2) is not damaged by heat.

The lower limit of the thickness of the protective layer 3 is 1 μm or more, and the thickness of the protective layer 3 is preferably 3 μm or more. The upper limit of the thickness of the protective layer 3 is 20 μm or less, and the thickness of the protective layer 3 is preferably 15 μm or less and more preferably 10 μm or less. When the thickness of the protective layer 3 is small, the reflection property of infrared light is high, but the abrasion resistance is impaired to make the function as the protective layer 3 unable to be sufficiently exhibited. When the thickness of the protective layer 3 is large, the heat insulating property of the infrared reflective film is degraded. When the thickness of the protective layer 3 falls within the foregoing range, the protective layer 3 small in absorption of infrared light and capable of appropriately protecting the reflective layer 2 is obtained.

It is to be noted that the normal emittance is represented, as specified in JIS R3106, by the relation, normal emittance (εn) = 1 - spectral reflectance (ρn). The spectral reflectance (ρn) is measured in the thermal radiation wavelength region from 5 to 50 μm at normal temperature. The wavelength region from 5 to 50 μm is the far infrared light region, and with the increase of the reflectance in the far infrared light wavelength region, the normal emittance is decreased.

The ratio between k, 1 and m in chemical formula I is preferably k:l:m = 5 to 50% by weight:25 to 85% by weight:0 to 60% by weight (with the proviso that the sum of k, 1 and m is 100% by weight). More preferably, the ratio k:l:m = 15 to 40% by weight:55 to 85% by weight:0 to 20% by weight (with the proviso that the sum of k, 1 and m is 100% by weight). Furthermore preferably, the ratio k:l:m = 25 to 40% by weight:55 to 75% by weight:0 to 10% by weight (with the proviso that the sum of k, 1 and m is 100% by weight).

From the viewpoint of imparting satisfactory solvent resistance to the protective layer 3, the protective layer 3 preferably has a cross-linked structure between the polymers. By allowing the polymers to be cross-linked to each other, the solvent resistance of the protective layer 3 is improved, and hence even when a solvent capable of dissolving the polymer is brought into contact with the protective layer 3, the elution of the protective layer 3 can be prevented.

Examples of the technique to impart to the polymers the cross-linked structure in which the polymers are cross-linked to each other include a technique in which after the drying of the solvent, the protective layer 3 is irradiated with electron beam. The lower limit of the accumulated irradiation dose of the electron beam is 50 kGy or more, and the accumulated irradiation dose of the electron beam is preferably 100 kGy or more and more preferably 200 kGy or more. The upper limit of the accumulated irradiation dose of the electron beam is 1000 kGy or less, and the accumulated irradiation dose of the electron beam is preferably 600 kGy or less and more preferably 400 kGy or less. When one run of electron beam irradiation is performed, the accumulated irradiation dose means the irradiation dose of the one run of electron bean irradiation; when a plurality of runs of electron beam irradiation are performed, the accumulated irradiation dose means the sum of the irradiation doses of the plurality of runs of electron beam irradiation. The irradiation dose of one run of electron beam irradiation is preferably 300 kGy or less. When the accumulated irradiation dose of electron beam falls within the foregoing range, sufficient mutual cross-links between the polymers can be obtained. Also, when the accumulated irradiation dose of electron beam falls within the foregoing range, the yellowing of the polymer or the substrate 1 caused by the electron beam irradiation can be suppressed to the lowest limit, and thus an infrared reflective film low in coloration can be obtained. These electron beam irradiation conditions are the irradiation conditions based on the acceleration voltage of 150 kV.

When a polymer is dissolved in a solvent, or after a polymer is dissolved in a solvent, it is preferable to add a cross-linking agent such as a multifunctional monomer such as a radical polymerizable monomer. In particular, a radical polymerizable (meth)acrylate-based monomer is preferable. When a multifunctional monomer is added, the multifunctional groups included in the multifunctional monomer react with (are bonded to) the respective polymer chains, and thus the polymers tend to be mutually cross-linked (through the intermediary of the multifunctional monomer). Accordingly, even when the accumulated irradiation dose of electron beam is decreased (to about 50 kGy), sufficient mutual cross-linking of the polymers can be obtained. Accordingly, the accumulated irradiation dose of electron beam can be a low irradiation dose. Such a decrease of the accumulated irradiation dose of electron beam allows the yellowing of the polymer or the substrate 1 to be further suppressed, and additionally, allows the productivity to be improved.

However, the increase of the addition amounts of the additives degrades the normal emittance of the surface on the side of the protective layer 3 (with reference to the reflective layer 2) of the infrared reflective film. The degradation of the normal emittance degrades the infrared reflection property of the infrared reflective film, and degrades the heat insulating property of the infrared reflective film. Accordingly, the addition amount(s) of the additive(s) is preferably 1 to 35% by weight and more preferably 2 to 25% by weight in relation to the polymer.

The infrared reflective film according to the present embodiment is provided with an aqueous urethane adhesive layer (not shown) between the reflective layer 2 and the protective layer 3. The aqueous urethane adhesive layer is obtained, for example, by applying to the reflective layer an aqueous polyurethane resin composition including a polyurethane resin aqueous dispersion and a polyisocyanate aqueous dispersion, and then drying the applied aqueous polyurethane resin composition. The aqueous dispersion urethane adhesive is preferable in that the aqueous dispersion urethane adhesive does not include any solvent, and hence environmental load can be reduced.

The polyurethane resin aqueous dispersion is prepared by cross-linking with polyamine a polyester polyol or an organic polyisocyanate. Moreover, the polyurethane resin aqueous dispersion may further include a polyol compound having an aromatic ring and having a number average molecular weight of less than 500 and/or an alicyclic polyol compound, or a compound having in the molecule thereof an anionic hydrophilic group such as a carboxyl group, and these compounds may also be cross-linked compounds.

Examples of such a polyol compound having an aromatic ring and having a number average molecular weight of less than 500 and/or such an alicyclic polyol compound include bisphenol A, bisphenol F, bisphenol S, 1,4-cyclohexanediol and 1,4-cyclohexanedimethanol.

Examples of such a compound having an anionic hydrophilic group include dimethylolpropionic acid, dimethylolbutanoic acid and dimethylolvaleric acid.

The polyamine is a compound having in the molecule thereof two or more amino groups, and examples of the polyamine include ethylene diamine and propylene diamine.

Examples of the polyisocyanate aqueous dispersion include: an isocyanurate-modified product of hexamethylenediamine diisocyanate (trade name: "Aquanate 100," manufactured by Nippon Polyurethane Industry Co., Ltd.) and an adduct modified product of hexamethylene diisocyanate (trade name: "Duranate WB40-80D," manufactured by Asahi Kasei Chemicals Corp.).

The aqueous polyurethane resin composition is preferably prepared by mixing the polyurethane resin aqueous dispersion and the polyisocyanate aqueous dispersion so as for the solid content of the polyisocyanate aqueous dispersion to be 10 to 80% by weight in relation to 100% by weight of the solid content of the polyurethane resin aqueous dispersion; the aqueous polyurethane resin composition may further include a cross-linking agent.

Examples of the cross-linking agent include an organic amino group, an oxazoline group, an epoxy group and an carbodiimide group. These compounds are groups capable of satisfactorily reacting in the case where a carboxyl group is included in the polyurethane resin aqueous dispersion or the polyisocyanate aqueous dispersion, and the case where an oxazoline group is included is particularly preferable. Among these, a cross-linking agent having an oxazoline group is preferable in that the pot life at room temperature of the aqueous polyurethane resin composition at the time of use is long, the cross-linking reaction is allowed to proceed by heating, and hence the workability is satisfactory.

Examples of such an aqueous polyurethane resin composition include the "Super Flex" series such as Super Flex 210 and Super Flex 170 manufactured by Dai-ichi Kogyo Seiyaku Co., Ltd.

The lower limit of the thickness of the adhesive layer is 10 nm or more, and the thickness of the adhesive layer is preferably 50 nm or more. The upper limit of the thickness of the adhesive layer is 600 nm or less, and the thickness of the adhesive layer is preferably 300 nm or less. When the thickness of the adhesive layer is smaller than 10 nm, no sufficient adhesive force may be imparted, and when the thickness of the adhesive layer exceeds 600 nm, the heat insulating function may be degraded.

The drying is preferably performed at a drying temperature set at a temperature of 60°C or higher and preferably set at 100°C or higher.

In the present embodiment, the urethane-based adhesive layer is formed between the reflective layer 2 and the protective layer 3; however, without being limited to this case, no urethane-based adhesive layer may be formed between the reflective layer 2 and the protective layer 3.

In accordance with the infrared reflective film according to the present embodiment including the configuration as described above, the reduction of the thickness of the layer structure on the reflective layer 2, namely, the thickness of the protective layer 3 allows the normal emittance of the surface on the side of the protective layer 3 (with reference

to the reflective layer 2) to be made small. In particular, the use of a material hardly absorbing and readily transmitting far infrared light such as nitrile rubber, hydrogenated nitrile rubber or completely hydrogenated nitrile rubber for the protective layer 3 also allows the normal emittance to be made small. Herewith, even when far infrared light is incident to the protective layer 3, far infrared light is hardly absorbed by the protective layer 3, reaches the reflective layer 2, and consequently tends to be reflected on the reflective layer 2. Accordingly, the attachment of the infrared reflective film according to the present embodiment to a translucent member such as a window glass on the indoor side thereof can shield the far infrared light passing through the translucent member and emitted to the outside from the inside of a room, and thus it is possible to expect the heat insulating effect in winter or during night when the temperature inside the room is lowered. In the infrared reflective film according to the present embodiment, for that purpose, the normal emittance of the surface on the side of the protective layer 3 is set at 0.20 or less. More preferably, the normal emittance is 0.15 or less.

In accordance with the infrared reflective film according to the present embodiment, by making high the visible light transmittance (see, JIS A5759), the translucency of the translucent member is not impeded. In the infrared reflective film according to the present embodiment, for that purpose, the visible light transmittance is set at 50% or more.

Even when near infrared light is incident to (the adhesive layer 4 and) the substrate 1, the near infrared light is hardly absorbed by (the adhesive layer 4 and) the substrate 1, reaches the reflective layer 2, and consequently tends to be reflected on the reflective layer 2. Accordingly, the attachment of the infrared reflective film according to the present embodiment to a translucent member such as a window glass on the indoor side thereof can shield the near infrared light passing through the translucent member such as a window glass and incident into the inside of a room, and thus it is possible to expect the heat shielding effect in summer in the same manner as conventional infrared reflective films. In the infrared reflective film according to the present embodiment, for that purpose, the solar transmittance(see, JIS A5759) of light made incident from the surface on the side of the substrate 1 (with reference to the reflective layer 2) is set at 60% or less.

In accordance with the infrared reflective film of the present embodiment, as described above, the indentation hardness of the protective layer 3 is 1.2 MPa or more to result in a small deformation magnitude of the protective layer 3 due to indentation, and consequently the protective layer 3 tends to be hardly broken partially or wholly. Accordingly, it is possible to prevent a situation in which the breakage of the protective layer 3 results in the exposure of the reflective layer 2 low in abrasion resistance, to subject the reflective layer 2 to damage. It is also possible to prevent development into a situation in which the infrared light reflection property is impaired to lead to insufficient functioning of the infrared reflective film.

In particular, the mutual cross-linking of the polymers in the protective layer 3 improves the protective layer 3 in terms of the solvent resistance as well as the suppression of the deformation due to indentation. Thus, even when a solvent capable of dissolving the polymer is brought into contact with the protective layer 3, the elution of the protective layer 3 can be prevented. Accordingly, the degradation of the abrasion resistance due to the exposure of the reflective layer 2 can be prevented.

## Examples

The present inventors prepared the infrared reflective films according to the present embodiment (Examples 1 to 7), also prepared infrared reflective films for comparison (Comparative Examples 1 and 2), subjected these films to an indentation test with a micro hardness tester, and measured the normal emittance values of these films.

The preparation method is as follows in a manner common to all of Examples 1 to 7 and Comparative Examples 1 and 2. A 50-μm-thick polyethylene terephthalate film (trade name: "Diafoil T602E50," manufactured by Mitsubishi Plastics, Inc.) was used as the substrate 1. On one surface 1a of the substrate 1, a reflection film 2 was formed by a DC magnetron sputtering method. Specifically, by using a DC magnetron sputtering method, on one surface 1a of the substrate 1, a metal oxide layer 2b made of indium tin oxide was formed in a thickness of 35 nm, a translucent metal layer 2a made of an Ag-Pd-Cu alloy was formed thereon in a thickness of 18 nm, a metal oxide layer 2c made of indium tin oxide was formed thereon in a thickness of 35 nm, and the resulting layered structure was used as a reflective layer 2. Then, on the reflective layer 2, a protective layer 3 was formed by a coating method. The detailed formation conditions of the protective layer 3 are described in detail in the description of each of Examples and Comparative Examples.

In each of Examples 1 to 7 and Comparative Examples 1 and 2, for the measurement of the indentation hardness of the protective layer 2, "the Observation type micro material evaluation system, Micro Indent Scope MIS-2000 (trade name, manufactured by Sanko Co., Ltd.)" was used. In each of Examples and Comparative Examples, the measurement conditions of the indentation hardness were as follows. On a slide glass cut out to a size of 1.5-cm square, the substrate (polyethylene terephthalate film) 1 of the infrared reflective film obtained by the foregoing method was laminated to form a laminate. Between the slide glass and the substrate 1 of the infrared reflective film, an adhesive layer was interposed. Next, the laminate was fixed on a stage so as for the protective layer 3 to be on the surface side, and an indenter C was indented into the protective layer 3 until a predetermined indentation depth D was reached with reference to the surface of the protective layer 3. Then, in a state in which the indenter C was indented into the protective layer 3 to the predetermined indentation depth D, the indentation load P on the indenter C and the projected contact area A in this state were measured, and the indentation hardness was derived from the foregoing formula 1. Here, as the indenter C, a diamond Berkovich-type indenter was used. The indentation depth D of the indenter C with reference to the surface of the protective layer 3 was set at 3 μm and the indentation speed of the indenter C was set at 0.1 μm/sec.

The measurement method of the normal emittance was as follows. By using a Fourier transform infrared spectroscopy (FT-IR) apparatus (manufactured by Varian, Inc.) equipped with an angle variable reflection accessory, the regular reflectance of the infrared light of the wavelengths from 5 microns to 25 microns was measured, and the normal emittance was derived according to JIS R 3106-2008 (testing method on transmittance, reflectance and emittance of flat glasses and evaluation of solar heat gain coefficient).

<Example 1>

A solution was prepared by mixing 10% by weight of a completely hydrogenated nitrile rubber (NBM: manufactured by Lanxess GmbH, trade name: "Therban 5005" [k: 33.3, 1: 66.7, m: 0, R1 to R3: H]) and 90% by weight of methyl ethyl ketone (manufactured by Wako Pure Chemical Industries, Ltd.), and by stirring the resulting mixture at a temperature of 80°C for 5 hours to dissolve the completely hydrogenated nitrile rubber in the solvent, methyl ethyl ketone. Then, the solution was applied onto the reflective layer 2 with an applicator and was dried in an air circulation type drying oven at 120°C for 10 minutes. Thus, a 5-μm-thick protective layer 3 was formed. Subsequently, electron beam irradiation was performed from the surface side of the protective layer 3 by using an electron beam irradiation apparatus (product name: "EC250/30/20mA," manufactured by Iwasaki Electric Co., Ltd.), and thus, an infrared reflective film according to Example 1 was obtained. The electron beam irradiation conditions were such that the line speed was set at 3 m/min, the acceleration voltage was set at 150 kV and the accumulated irradiation dose was set at 400 kGy. In the present Example, the irradiation dose of one run of irradiation was 200 kGy and two runs of electron beam irradiation were performed.

<Example 2>

Example 2 is the same as Example 1 except that as the material used for the protective layer, a hydrogenated nitrile rubber (HNBR: manufactured by Lanxess GmbH, trade name: "Therban 5065" [k: 33.3, 1: 63, m: 3.7, R1 to R5: H]) was used.

<Example 3>

Example 3 is the same as Example 1 except that as the material used for the protective layer, a hydrogenated nitrile rubber (HNBR: manufactured by Lanxess GmbH, trade name: "Therban 4367" [k: 27.4, 1: 69.1, m: 3.5, R1 to R5: H]) was used.

<Example 4>

Example 4 is the same as Example 1 except that as the material used for the protective layer, a completely hydrogenated nitrile rubber (NBM: manufactured by Lanxess GmbH, trade name: "Therban 3407" [k: 20.5, 1: 79.5, m: 0, R1 to R3: H]) was used.

<Example 5>

Example 5 is the same as Example 1 except that as the material used for the protective layer, a hydrogenated nitrile rubber (HNBR: manufactured by Lanxess GmbH, trade name: "Therban 3496" [k: 20.5, 1: 68.7, m: 10.8, R1 to R5: H]) was used.

<Example 6>

Example 6 is the same as Example 1 except that as the material used for the protective layer, an acrylonitrile butadiene rubber (NBR: manufactured by JSR Corp., N22L [k: 27.4, 1: 36.3, m: 36.3, R1, R4, R5: H]) was used.

<Example 7>

Example 7 is the same as Example 1 except that the accumulated irradiation dose of electron beam was set at 100 kGy.

<Comparative Example 1>

Comparative Example 1 is the same as Example 2 except that no electron beam irradiation was performed.

<Comparative Example 2>

Comparative Example 2 is the same as Example 5 except that no electron beam irradiation was performed.

These results are shown in Table 1.

[Table 1]

| | Material | Amounts of repeating units (% by weight) | | | Energy ray type | Indentation hardness | Normal emittance |
|---|---|---|---|---|---|---|---|
| | | A | B | C | | | |
| Example 1 | NBM | 33.3 | 66.7 | 0 | Electron beam | 2.6 | 0.11 |
| Example 2 | HNBR | 33.3 | 63 | 3.7 | Electron beam | 3.5 | 0.11 |
| Example 3 | HNBR | 27.4 | 69.1 | 3.5 | Electron beam | 2.1 | 0.13 |
| Example 4 | NBM | 20.5 | 79.5 | 0 | Electron beam | 1.6 | 0.11 |
| Example 5 | HNBR | 20.5 | 68.7 | 10.8 | Electron beam | 2.2 | 0.12 |
| Example 6 | NBM | 27.4 | 36.3 | 36.3 | Electron beam | 2.2 | 0.15 |
| Example 7 | NBM | 33.3 | 66.7 | 0 | Electron beam | 1.3 | 0.12 |
| Comparative Example 1 | HNBR | 33.3 | 63 | 3.7 | None | 1 | 0.12 |
| Comparative Example 2 | NBM | 20.5 | 68.7 | 10.8 | None | 0.39 | 0.12 |

In Examples 1 to 7, the normal emittance is 0.11 to 0.15 (0.20 or less), and thus Examples 1 to 7 are found to be excellent in far infrared light reflection property. In Examples 1 to 7, the indentation hardness is 1.2 MPa or more, and the deformation due to indentation is small. On the other hand, in Comparative Examples 1 and 2, the deformation due to indentation is large. Accordingly, in Examples 1 to 7, the deformation due to indentation is found to be largely suppressed.

In each of Example 8 and Example 9, the reflective layer was formed in the same manner as in the foregoing Examples 1 to 7, and then, an urethane-based adhesive layer was formed on the reflective layer according to the following procedure. More specifically, an aqueous urethane resin having a carboxyl group, "Super Flex 210" (manufactured by Dai-ichi Kogyo Seiyaku Co., Ltd.) was applied onto the reflective layer, and dried at 100°C for 4 minutes to form a 100-nm-thick urethane-based adhesive layer. Then, on the urethane-based adhesive layer, the protective layer 3 was formed by coating.

Next, in each of Example 8 and Example 9, the indentation hardness and the normal emittance of the protective layer 3 were measured in the same procedure as in the foregoing Examples 1 to 7. Additionally, in each of Example 8 and Example 9, the Gakushin wear testing was performed. More specifically, the Gakushin-type color fastness rubbing tester (manufactured by Yasuda Seiki Seisakusho Ltd.) was used, a piece of cotton cloth (Canequim No. 3) was used as a rubbing device, the rubbing device was made to abut to a specimen (each of Examples 7 and 8), and a test was performed in which the rubbing device was made to perform 100 times of back and forth movements while a load of 500 g was being applied to the rubbing device. An evaluation was performed by visual inspection, and the case where the peeling of the protective layer did not occur or was extremely small was marked with ○, and the case where the protective layer was peeled across the surface and the reflective layer was exposed was marked with x.

<Example 8>

Example 8 is the same as Example 2 except that an urethane-based adhesive layer was formed between the reflective layer and the protective layer.

<Example 9>

Example 9 is the same as Example 5 except that an urethane-based adhesive layer was formed between the reflective layer and the protective layer.
These results are shown in Table 2.

[Table 2]

| | Material | Amounts of repeating units (% by weight) | | | Energy ray type | Indentation hardness | Normal emittance | Gakushin wear testing |
|---|---|---|---|---|---|---|---|---|
| | | A | B | C | | | | |
| Example 8 | HNBM | 33.3 | 63 | 3.7 | Electron beam | 3.5 | 0.11 | ○ |
| Example 9 | HNBR | 20.5 | 66.7 | 10.8 | Electron beam | 2.2 | 0.12 | ○ |

In Examples 8 and 9, the normal emittance is 0.11 to 0.12 (0.20 or less), and thus Examples 8 and 9 are found to be excellent in far infrared light reflection property. In Examples 8 and 9, the indentation hardness is 1.2 MPa or more, and the deformation due to indentation is small. Accordingly, in Examples 8 and 9, the deformation due to indentation is found to be largely suppressed.
Also, in Examples 8 and 9, an urethane-based adhesive layer was formed between the reflective layer and the protective layer, and hence the adhesion between the reflective layer and the protective layer was allowed to be satisfactory, and a satisfactory abrasion resistance was manifested in the Gakushin wear testing.
The infrared reflective film according to the present invention is not limited to the foregoing embodiment, and various modifications can be made within a range not departing from the gist of the present invention.
For example, in the foregoing embodiment, a polymer is described which includes at least any two or more repeating units of the repeating units A, B and C. However, the polymer is not limited to this configuration. Repeating units other than these repeating units may also be included in a range not impairing the properties required for the protective layer. Examples of the other repeating units include: styrene, $\alpha$-methyl styrene, (meth)acrylic acid, methyl (meth)acrylate, ethyl (meth)acrylate, 2-hydroxyethyl (meth)acrylate, vinyl acetate, and (meth)acrylamide. The proportion of these repeating units in relation to the whole polymers is preferably 10% by weight or less.
In the foregoing embodiment, the reflective layer 2 is formed by vapor deposition. However, the formation of the reflective layer 2 is not limited to this configuratio. For example, when a reflective film is used, a reflective layer is provided apart from a substrate, and a reflective layer may be formed by attaching the reflective film onto the substrate.
The infrared reflective film according to the foregoing embodiment is an infrared reflective film simultaneously having both of the heat shielding property and the heat insulating property. However, the infrared reflective film is not limited to this case. Needless to say, the infrared reflective film according to the present invention can be applied to conventional infrared reflective films having only heat shielding property.

REFERENCE SIGNS LIST

| | |
|---|---|
| 1 | Substrate |
| 1a | One surface |
| 1b | Other surface |
| 2 | Reflective layer |
| 2a | Translucent metal layer |
| 2b,2c | Metal oxide layers |
| 3 | Protective layer |
| 4 | Adhesive layer |

C Indenter
PA Projected area
D Indentation depth
P Load

## Claims

1. An infrared reflective film comprising a reflective layer and a protective layer sequentially laminated on one surface of a substrate,
wherein the protective layer is a layer including a polymer including at least any two or more repeating units of the repeating units A, B and C in the following chemical formula I, and
the indentation hardness of the protective layer is 1.2 MPa or more.

[Formula 1]

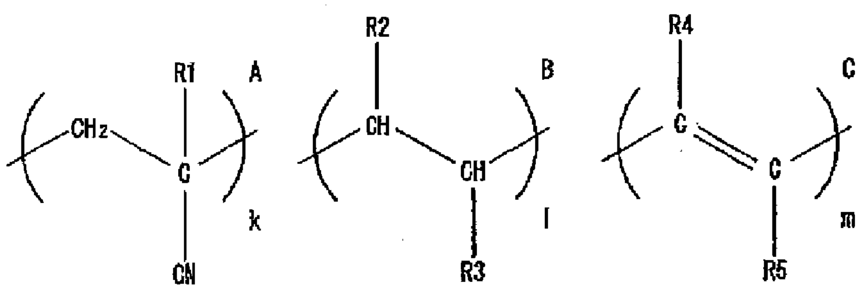

(R1: H or a methyl group; R2 to R5: H or an alkyl or alkenyl group having 1 to 4 carbon atoms)

2. The infrared reflective film according to claim 1, wherein the protective layer has a cross-linked structure of the polymer.

3. The infrared reflective film according to claim 2, wherein the cross-linked structure is formed by irradiation of the protective layer with an electron beam.

4. The infrared reflective film according to claim 1, wherein the normal emittance of the surface on the protective layer side is 0.20 or less.

5. The infrared reflective film according to claim 1, further comprising an aqueous urethane adhesive layer between the reflective layer and the protective layer.

F I G. 1

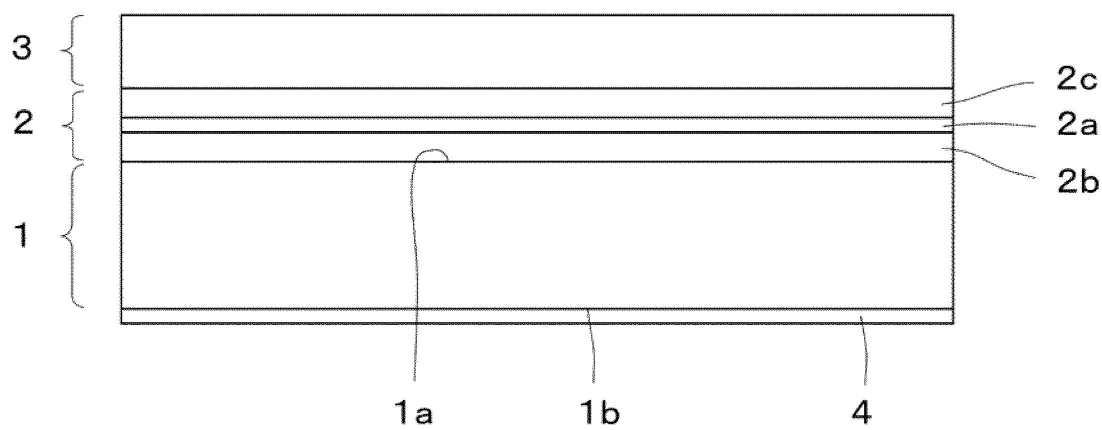

F I G. 2 A

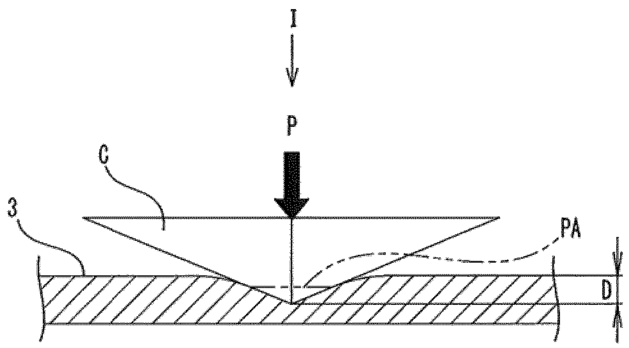


F I G. 2 B

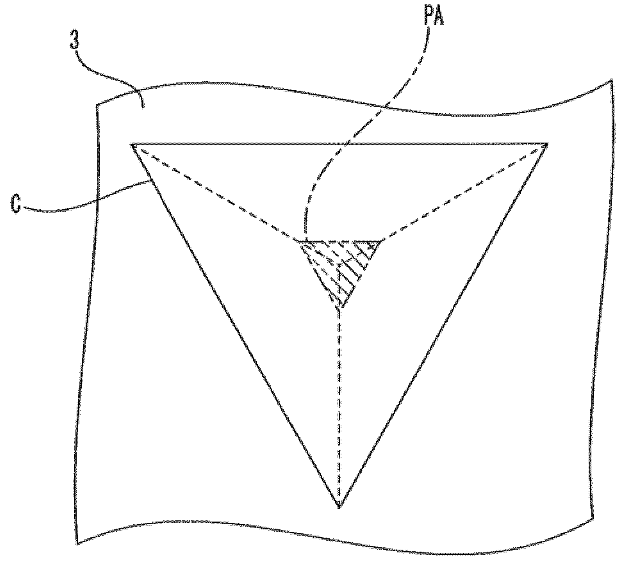

## INTERNATIONAL SEARCH REPORT

International application No.
PCT/JP2012/082351

A. CLASSIFICATION OF SUBJECT MATTER
*B32B27/30*(2006.01)i, *B32B7/02*(2006.01)i

According to International Patent Classification (IPC) or to both national classification and IPC

B. FIELDS SEARCHED

Minimum documentation searched (classification system followed by classification symbols)
B32B27/30, B32B7/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 55-149909 A (Teijin Ltd.), 21 November 1980 (21.11.1980), claims; page 2, lower right column, line 18 to page 3, upper right column, line 19 (Family: none) | 1-5 |
| A | JP 8-501993 A (The Goodyear Tire & Rubber Co.), 05 March 1996 (05.03.1996), claims; page 5, line 1 to page 6, line 5; page 10, line 23 to page 11, line 9; page 13, line 9 to page 15, line 24 & US 5314741 A & EP 663869 A & WO 1994/007690 A1 & DE 69322786 T & DE 69322786 D & BR 9307179 A & AU 5000293 A & CA 2091019 A & KR 10-0276476 B & CA 2091019 A1 | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 12 March, 2013 (12.03.13) | 26 March, 2013 (26.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No. PCT/JP2012/082351

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-207223 A (Toray Industries, Inc.), 20 October 2011 (20.10.2011), claims; paragraphs [0002], [0003], [0012], [0013]; fig. 1 (Family: none) | 1-5 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 61051762 B
- JP 2005195357 A